# EUROPEAN PATENT APPLICATION

(11) **EP 4 742 433 A1**
(43) Date of publication of application: **13.05.2026**
(21) Application number: 23947241.8
(22) Date of filing: 06.09.2023
(51) Int. Cl.: H01M 50/59, H01M 10/058, H01M 10/0525, H01M 10/054, H01M 50/531, H01M 50/204, H01M 50/249

(54) **BATTERY CELL, BATTERY, AND ELECTRIC DEVICE**

(30) Priority: 03.08.2023 CN 202310970192
(71) Applicant: Contemporary Amperex Technology Co., Limited, Ningde, Fujian 352100 (CN)
(72) Inventor: WU, Kai, Ningde, Fujian 352100 (CN); YANG, Zhenfei, Ningde, Fujian 352100 (CN); ZHU, Linlin, Ningde, Fujian 352100 (CN); YU, Qi, Ningde, Fujian 352100 (CN)
(74) Representative: Gong, Jinping
(86) International application number: PCT/CN2023/117191
(87) International publication number: WO 2025/025299

(57) **Abstract**

A battery cell, a battery, and an electric device are provided. The battery cell includes a main body portion, a first tab, a first insulating adhesive, and a second insulating adhesive. The first tab is formed at an axial end of the main body portion. The first insulating adhesive is adhered to an outer periphery of the main body portion. The second insulating adhesive is adhered to the first tab. In an axial direction of the main body portion, a gap is provided between the first insulating adhesive and the second insulating adhesive. The battery includes the battery cell. The electric device includes the battery cell or the battery.

## Description

The present application is based on and claims priority to Chinese Patent Application No. 202310970192.8, filed on August 3, 2023, and the content disclosed in this Chinese application is incorporated herein by reference in its entirety.

### TECHNICAL FIELD

The present invention relates to the field of battery technologies, and in particular, to a battery cell, a battery, and an electric device.

### BACKGROUND

Energy conservation and emission reduction are crucial to the sustainable development of the automobile industry. Electric vehicles, with their advantages in energy conservation and emission reduction, have become an important part of the sustainable development of the automobile industry. For electric vehicles, battery technologies are an important factor in connection with their development.

During use, batteries undergo continuous charging or discharging, making insulation an important aspect for batteries. Generally, an insulating adhesive is applied to the exterior of a cell, and the method of applying the insulating adhesive affects the overall performance of the battery.

The description above merely provides background information related to the present application and does not necessarily constitute the prior art.

### SUMMARY

The present application provides a battery cell, a battery, and an electric device.

According to a first aspect, the present application provides a battery cell including a main body portion, a first tab, a first insulating adhesive, and a second insulating adhesive. The first tab is formed at an axial end of the main body portion, the first insulating adhesive is adhered to an outer periphery of the main body portion, and the second insulating adhesive is adhered to the first tab, where, in an axial direction of the main body portion, a gap is provided between the first insulating adhesive and the second insulating adhesive.

In the embodiments provided by the present application, by providing a gap between the first insulating adhesive and the second insulating adhesive in the axial direction of the main body portion, the formation of a step between the first insulating adhesive and the second insulating adhesive can be reduced, thereby reducing stress concentration points when the battery cell swells, mitigating issues such as electrode plate breakage, which is conducive to improving the safety of the battery.

In some embodiments, the gap extends in a circumferential direction of the main body portion. This arrangement ensures that, in the circumferential direction of the main body portion, there is no overlap between the first insulating adhesive and the second insulating adhesive, and therefore, there are no lap portions between the first insulating adhesive and the second insulating adhesive, preventing the formation of any step, and significantly reducing stress concentration points during the swelling of the battery cell, preventing issues such as electrode plate breakage in the battery cell from occurring.

In some embodiments, in the axial direction of the main body portion, a width of the gap is 1 mm to 2 mm.

Setting the width of the gap to be from 1 mm to 2 mm can both reduce stress concentration points during the swelling of the battery cell, preventing issues such as electrode plate breakage in the battery cell from occurring, and allow the electrode assembly to have as large an insulation coverage range as possible, improving insulation performance.

In some embodiments, in the axial direction of the main body portion, the width of the gap is fixed or variable along the circumferential direction.

Setting the width of the gap to be fixed along the circumferential direction can ensure uniformity in the width of gap, enhancing the aesthetic appearance and overall integrity of the product. Alternatively, setting the width of gap to vary along the circumferential direction can reduce the difficulty of adhering the first insulating adhesive and the second insulating adhesive, improving adhesion efficiency.

In some embodiments, a puncture resistance of the second insulating adhesive is greater than a puncture resistance of the first insulating adhesive.

The first tab is generally made of aluminum foil, which is more fragile compared to the main body portion. Therefore, setting the puncture resistance of the second insulating adhesive to be greater than the puncture resistance of the first insulating adhesive can more effectively protect the first tab, and the first tab is prevented from being damaged.

In some embodiments, in a circumferential direction of the first tab, a head portion and a tail portion of the second insulating adhesive have an overlapping portion.

By providing an overlapping portion, the head portion and tail portion of the second insulating adhesive can be bonded together, such that the second insulating adhesive forms a closed loop in the circumferential direction, providing ° comprehensive insulation protection for the first tab. This also effectively improves the adhesion strength of the second insulating adhesive, so that the second insulating adhesive is more firmly adhered to the first tab. Additionally, as the second insulating adhesive generally has some elasticity, providing an overlapping portion to bond the head portion and tail portion together can prevent the second insulating adhesive from retracting due to reduced or lost elasticity, leading to failure in protecting the first tab.

In some embodiments, in the circumferential direction of the first tab, a length of the overlapping portion is 5 mm to 10 mm.

Setting the circumferential length of the overlapping portion to be from 5 mm to 10 mm can effectively enhance the stability of the second insulating adhesive while preventing stress concentration due to an excessively long circumferential length of the overlapping portion.

In some embodiments, an upper layer of the overlapping portion is misaligned relative to a lower layer. This embodiment allows for misalignment of the tail portion of the second insulating adhesive during adhesion, providing a certain operational tolerance without affecting insulation and protection, thereby effectively improving operational efficiency. In addition, this misalignment may result from manufacturing errors of the second insulating adhesive, allowing for some manufacturing errors and reducing the precision requirements for manufacturing the second insulating adhesive, thereby effectively controlling costs.

In some embodiments, in the circumferential direction of the first tab, the head edge line and the tail edge line of the second insulating adhesive are parallel.

In the above embodiment, having the head edge line and the tail edge line of the second insulating adhesive parallel can enhance the overall aesthetic appearance of the second insulating adhesive, and the overlapping portion formed after adhesion is a regular rectangle, which is relatively beautiful and regular.

In some embodiments, in the circumferential direction of the first tab, the head edge line and/or the tail edge line of the second insulating adhesive is inclined relative to an axis of the main body portion.

By setting the head edge line and/or the tail edge line of the second insulating adhesive to be inclined relative to the axis of the main body portion, a midline of the overlapping portion is inclined relative to the axis of the main body portion, thereby increasing a length of the midline of the overlapping portion. When the second insulating adhesive retracts due to reduced elasticity, this can increase the ability of the overlapping portion to resist retraction forces, enhancing the adhesion strength of the second insulating adhesive.

In some embodiments, the second insulating adhesive includes a first adhesive portion and a second adhesive portion, where the first adhesive portion is circumferentially adhered to an outer periphery of the first tab, and the second adhesive portion is adhered to an end face of the first tab away from the main body portion.

By providing the first adhesive portion and the second adhesive portion, the first adhesive portion can be circumferentially adhered to the outer periphery of the first tab, and the second adhesive portion can be adhered to the end face of the first tab away from the main body portion, thereby providing multi-directional protection for the first tab.

By providing the second adhesive portion, the end face of the first tab can be protected, preventing the structure of the end face of the first tab from lifting up beyond the height of the first adhesive portion and coming into contact with a housing, resulting in a short circuit.

In some embodiments, the battery further includes a first current collector disc disposed on the end face of the first tab away from the main body portion, and the second adhesive portion is adhered to the first current collector disc.

By adhering the second adhesive portion to the first current collector disc, the second adhesive portion can fully wrap around the portion of the first tab exposed outside the first current collector disc, thereby providing more comprehensive protection for the first tab.

In some embodiments, the first adhesive portion and the second adhesive portion are connected or integrally formed.

By connecting or integrally forming the first adhesive portion and the second adhesive portion, the first adhesive portion and the second adhesive portion can be connected as a whole. During adhesion of the second insulating adhesive, the cooperation between the first adhesive portion and the second adhesive portion can achieve better adhesion effect. For example, the first adhesive portion can be adhered to the outer periphery of the first tab first, and then a smoothing device can be used to adhere the second adhesive portion to the end face of the first tab.

In some embodiments, a viscosity of the second adhesive portion is greater than a viscosity of the first adhesive portion.

When the second adhesive portion is bent 90° inward from a position parallel to the axis of the main body portion to be adhered to the end face of the first tab, wrinkles may be formed in the second adhesive portion, and these wrinkled portions may be exposed to air, causing an adhesive material in the second adhesive portion to dehydrate due to air drying, thereby reducing its viscosity. In contrast, the first adhesive portion is adhered to the outer periphery of the first tab, and remains relatively flat after adhesion, with less chance of air entering, thus reducing the probability of viscosity reduction due to dehydration. Therefore, setting the viscosity of the second adhesive portion to be greater than the viscosity of the first adhesive portion can ensure that the second adhesive portion can still have sufficient viscosity to remain adhered to the end face of the first tab even after viscosity reduction due to dehydration.

Additionally, since the second adhesive portion is bent and smoothed onto the end face of the first tab, the elasticity of the second adhesive portion may decrease over time, posing a risk of retraction. Therefore, setting the viscosity of the second adhesive portion to be greater than the viscosity of the first adhesive portion can ensure the second adhesive portion to have greater resistance to the reduction in elasticity and retraction, preventing adhesion failure of the second adhesive portion.

The viscosity of the first adhesive portion is lower than the viscosity of the second adhesive portion. This allows the first adhesive portion to be easily removed without adhering to the material of the main body portion if the first adhesive portion needs to be reworked due to improper adhesion, facilitating re-adhesion.

In some embodiments, a ratio of a width of the first adhesive portion in the axial direction of the main body portion to a width of the second adhesive portion in a direction perpendicular to the axis of the main body portion is from 1:1 to 2:1.

Setting the ratio of the width of the first adhesive portion in the axial direction of the main body portion to the width of the second adhesive portion in a direction perpendicular to the axis of the main body portion to be from 1:1 to 2:1 enables a more comprehensive protection of the first tab while achieving a reasonable distribution for the outer periphery and end face of the first tab under cost-saving conditions.

In some embodiments, the second insulating adhesive is provided with an indication line, where the indication line divides the second insulating adhesive into the first adhesive portion and the second adhesive portion.

By providing the indication line, the range of the first adhesive portion and the second adhesive portion can be quickly identified through the indication line during adhesion of the second insulating adhesive. The indication line is used as an operational aid, effectively improving adhesion efficiency.

In some embodiments, a color of the indication line is different from a color of the second insulating adhesive.

By setting the color of the indication line to be different from the color of the second insulating adhesive, the indication line becomes more conspicuous, making it easier for operators to identify the position thereof.

In some embodiments, the second adhesive portion includes a substrate and adhesive backing disposed on the substrate, where a color of at least one of the substrate and the adhesive backing is set to prevent reflection from occurring when detecting the width of the second adhesive portion.

By setting the color of at least one of the substrate and the adhesive backing to prevent reflection from occurring when detecting the width of the second adhesive portion, reflection can be prevented from occurring due to overly light colors of the substrate and adhesive backing during width detection of the second adhesive portion, ensuring the accuracy of the test.

In some embodiments, the battery cell further includes a housing, where the housing has an accommodating cavity, the main body portion and the first tab are disposed in the accommodating cavity, and a material of the housing is configured to prevent corrosion from occurring due to contact between the housing and a negative electrode of the battery cell.

By setting the material of the housing to prevent corrosion from occurring due to contact with the negative electrode of the battery cell, corrosion can be prevented from occurring if the exposed portions bulge or warp upward and come into contact with the housing.

According to a second aspect, the present application provides a battery, including a box and the battery cell described above, where the battery cell is disposed within the box, and the battery cell is configured to provide electrical energy.

According to a third aspect, the present application provides an electric device, including the battery cell described above, where the battery cell is configured to supply electrical energy to the electric device; or the electric device including the battery described above, where the battery is configured to supply electrical energy to the electric device.

The foregoing descriptions are merely an overview of the technical solution of the present application. For a better understanding of the technical means in the present application such that they can be implemented according to the content of the specification, and to make the above and other objectives, features and advantages of the present application more obvious and easier to understand, the following describes specific embodiments of the present application.

### BRIEF DESCRIPTION OF DRAWINGS

To describe the technical solutions in the embodiments of the present application more clearly, the following briefly describes the accompanying drawings required for describing the embodiments of the present application. Apparently, the accompanying drawings in the following descriptions show merely some embodiments of the present application, and persons of ordinary skill in the art may still derive other drawings from the accompanying drawings without creative efforts.
FIG. 1 is a schematic structural diagram of an electric device according to some embodiments of the present application.
FIG. 2 is a schematic structural diagram of a battery according to some embodiments of the present application.
FIG. 3 is a schematic structural diagram of a battery cell according to some embodiments of the present application.
FIG. 4 is a cross-sectional view of the embodiment shown in FIG. 3 along cross-section A-A.
FIG. 5 is an enlarged view of the portion labeled B in FIG. 4.
FIG. 6 is a schematic diagram of the adhesion of the first insulating adhesive and the second insulating adhesive according to some embodiments of the battery cell disclosed in the present application.
FIG. 7 is a schematic diagram of the adhesion of the first insulating adhesive and the second insulating adhesive according to some other embodiments of the battery cell disclosed in the present application.
FIG. 8 is a schematic diagram of the adhesion of the first insulating adhesive and the second insulating adhesive according to still some embodiments of the battery cell disclosed in the present application.
FIG. 9 is a schematic structural diagram of the second insulating adhesive according to some embodiments of the battery cell disclosed in the present application.
FIG. 10 is a schematic structural diagram of the second insulating adhesive according to some other embodiments of the battery cell disclosed in the present application.

In the accompanying drawings, the figures are not drawn to scale.

Reference signs: 1000. vehicle; 100. battery; 200. controller; 300. motor; 10. box; 101. first cover body; 102. second cover body; 20. battery cell; 1. main body portion; 2. first tab; 3. first insulating adhesive; 4. second insulating adhesive; 41. first adhesive portion; 42. second adhesive portion; 43. overlapping portion; 44. indication line; 5. gap; 6. first current collector disc; 7. second tab; 8. second current collector disc; 9. housing; 11. insulating member; 12. sealing ring; 13. terminal post; 14. sealing nail; and 15. injection opening.

### DESCRIPTION OF EMBODIMENTS

The following describes in detail some embodiments of technical solutions of the present application with reference to the accompanying drawings. The following embodiments are merely intended for a clearer description of the technical solutions of the present application and therefore are merely used as examples which do not constitute any limitation on the protection scope of the present application.

Unless otherwise defined, all technical and scientific terms used herein shall have the same meanings as commonly understood by persons skilled in the art to which the present application relates. The terms used herein are intended to merely describe the specific embodiments rather than to limit the present application. The terms "include", "comprise", and "have" and any other variations thereof in the specification, claims and brief description of drawings of the present application are intended to cover non-exclusive inclusions.

In the descriptions of the embodiments of the present application, the technical terms "first", "second", and the like are merely intended to distinguish between different objects, and shall not be understood as any indication or implication of relative importance or any implicit indication of the number, specific sequence, or primary-secondary relationship of the technical features indicated. In addition, "perpendicular" means being perpendicular with an allowable range of error other than being strictly perpendicular. "Parallel" is not parallel in the strict sense but within an allowable range of error.

In this specification, reference to "embodiment" means that specific features, structures, or characteristics described with reference to the embodiment may be included in at least one embodiment of the present application. The word "embodiment" appearing in various places in the specification does not necessarily refer to the same embodiment or an independent or alternative embodiment that is exclusive of other embodiments. It is explicitly or implicitly understood by persons skilled in the art the embodiments described herein may be combined with other embodiments.

In the description of some embodiments of the present application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the descriptions of the embodiments of the present application, the term "multiple" means more than two, unless otherwise specifically defined. Similarly, "multiple groups" means more than two groups, and "multiple pieces" refers to more than two pieces, unless otherwise specifically defined.

In the description of the embodiments of the present application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of the present application rather than indicating or implying that the means or components mentioned must have specific orientations or must be constructed or manipulated according to specific orientations, and therefore shall not be construed as any limitation on the embodiments of the present application.

In the descriptions of the embodiments of the present application, unless otherwise specified and defined explicitly, the technical terms "mount", "connect", "join", and "fix" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skills in the art can understand specific meanings of these terms in the present application as appropriate to specific situations.

Currently, from the perspective of market development, application of batteries is being more extensive. Traction batteries have been widely used in energy storage power supply systems such as hydroelectric power plants, thermal power plants, wind power plants, and solar power plants, and many other fields including electric transportation tools such as electric bicycles, electric motorcycles, and electric vehicles, military equipment, and aerospace. With the continuous expansion of application fields of traction batteries, market demands for traction batteries are also expanding.

For cylindrical battery cells, a full-tab structure is generally adopted. During the manufacturing of a battery cell, after a cell is wound and tabs are formed, insulation treatment is required between the cell and a housing. Common insulation methods include adhesive insulation and insulation through an insulating cover.

For adhesive insulation, a common method is overlapping adhesion, where an insulating adhesive adhered to the tab overlaps with a large-surface coding adhesive adhered on a jelly roll in a height direction. Although this method can protect the entire cell within the insulating adhesive, the overlapping position of the insulating adhesive adhered on the tab and the large-surface coding adhesive adhered on the jelly roll forms a step with a certain height due to the stacking of multiple layers of adhesive. Moreover, since the group margin (the group margin being a ratio of the diameter of a cell to the diameter of a housing) of cylindrical cells is generally high, cell plates swell after charging and discharging. This results in stress concentration points at the step formed by the adhesive overlapping position, making the outer electrode plates of the cell prone to breakage and other failure phenomena during cycling, posing risks such as capacity loss of the cell or even fire.

For insulation through an insulating cover, an insulating cover with an open top is generally pre-manufactured using materials such as PET or PP. During the assembly of the cell, the insulating cover is directly fitted onto the tab end of the cell to form an insulating layer between the tab and the housing, achieving insulation.

However, the material of the insulating cover is generally thin, making the insulating cover soft and prone to deformation. Considering the manufacturability of placing the insulating cover at the end of the cell, the sidewall thickness of the insulating cover is generally relatively large, generally above 0.2 mm, to maintain the circularity thereof. A step with a certain height is still formed between the sidewall of the insulating cover and the large-surface coding adhesive on the cell, leading to the above stress concentration issue. Moreover, the insulating cover occupies significant space in the diameter space, resulting in a significant loss of the overall energy density of the cell.

Therefore, the present application improves the structure of a battery cell.

In the embodiments of the battery cell provided by the present application, along an axial direction of a main body portion, a gap is provided between a first insulating adhesive adhered to an outer periphery of the main body portion and a second insulating adhesive adhered to a first tab. By providing this gap, the formation of a step can be reduced, thereby reducing stress concentration points when the cell swells, mitigating issues such as electrode plate breakage, which is conducive to improving the safety of a battery.

The battery cell disclosed in the embodiments of the present application may be used without limitation in an electric device such as a vehicle, a ship, or an aircraft. The battery cell, battery, and the like disclosed in the present application may be used to constitute a power supply system for an electric device, which is conducive to mitigating and automatically adjusting the deterioration of cell swelling forces, supplementing electrolyte consumption, and enhancing the stability and prolonging the life service of battery performance.

An embodiment of the present application provides an electric device using a battery as a power source, where the battery is configured to provide electrical energy to the electric device. The electric device may be but is not limited to a mobile phone, a portable device, a notebook computer, an electric bicycle, an electric vehicle, a ship, a spacecraft, an electric toy, and an electric tool. For example, the spacecraft includes an airplane, a rocket, a space shuttle, and a spaceship. The electric toy includes a fixed or mobile electric toy, such as a game console, an electric vehicle toy, an electric ship toy, and an electric airplane toy. The electric tool includes an electric metal cutting tool, an electric grinding tool, an electric assembly tool, and an electric railway-specific tool, such as an electric drill, an electric grinder, an electric wrench, an electric screwdriver, an electric hammer, an electric impact drill, a concrete vibrator, and an electric planer.

For ease of description, the electric device of an embodiment of the application being a vehicle 1000 is used as an example for description of the following embodiments.

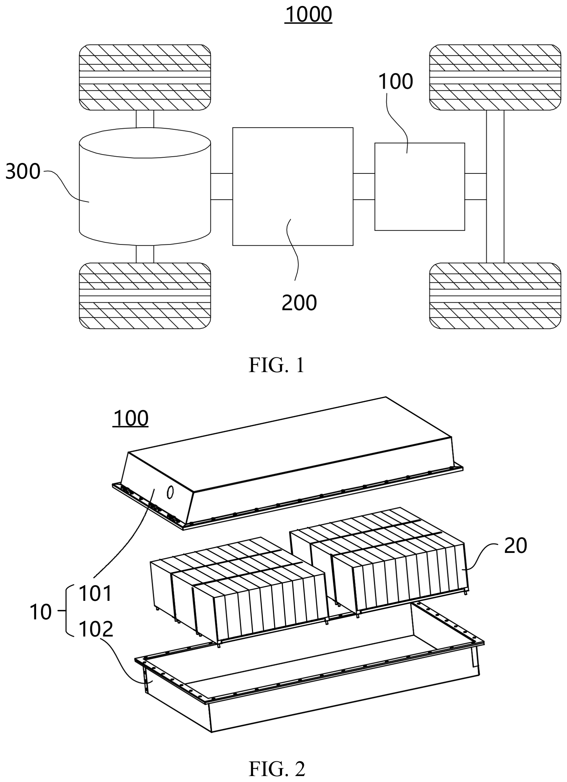

Referring to FIG. 1, FIG. 1 is a schematic structural diagram of the vehicle 1000 according to some embodiments of the present application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 100 inside, where the battery 100 may be arranged at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the battery 100 is configured to supply power for the motor 300 and other components in the vehicle, the controller 200 is configured to control operation of the motor 300, for example, to satisfy power needs of start, navigation, and driving of the vehicle 1000.

In some embodiments of the present application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is an exploded view of a battery 100 provided by some embodiments of the present application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first cover body 101 and a second cover body 102. The first cover body 101 and the second cover body 102 fit together to jointly define an accommodating space for accommodating the battery cell 20. The second cover body 102 may be a hollow structure with an opening at one end, the first cover body 101 may be a plate-shaped structure, and the first cover body 101 covers the opening side of the second cover body 102, so that the first cover body 101 and the second cover body 102 jointly define the r accommodating space. Alternatively, both the first cover body 101 and the second cover body 102 may be hollow structures with an opening at one side, and the opening side of the first cover body 101 is engaged with the opening side of the second cover body 102. Certainly, the box 10 formed by the first cover body 101 and the second cover body 102 may have a variety of shapes, for example, cylinder or cuboid.

In the battery 100, multiple battery cells 20 may be provided, and the multiple battery cells 20 may be connected in series, parallel, or series-parallel, where being connected in series-parallel means a combination of series and parallel connections of the multiple battery cells 20. The multiple battery cells 20 may be directly connected in series, parallel, or series-parallel, and then an entirety of the multiple battery cells 20 is accommodated in the box 10. Certainly, the battery 100 may alternatively be formed in a manner that multiple battery cells 20 are connected in series, parallel, or series-parallel first to form a battery module and then multiple battery modules are connected in series, parallel, or series-parallel to form an entirety which is accommodated in the box 10. The battery 100 may further include other structures. For example, the battery 100 may further include a busbar configured to implement electrical connection between the multiple battery cells 20.

The battery cell 20 includes a lithium-ion secondary battery, a lithium-ion primary battery, a lithium-sulfur battery, a sodium-lithium-ion battery, a sodium-ion battery, a magnesium-ion battery, or the like. This is not limited in the embodiments of this disclosure. The battery cell may be cylindrical, flat, rectangular, or of another shape. This is also not limited in the embodiments of this disclosure. Battery cells are generally classified into three types by packaging method: cylindrical battery cells, prismatic battery cells, and pouch battery cells. This is also not limited in the embodiments of this disclosure.

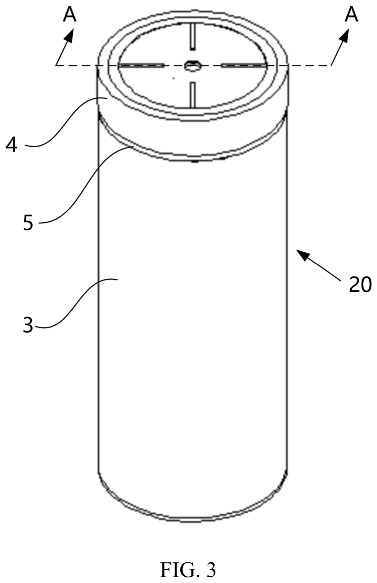

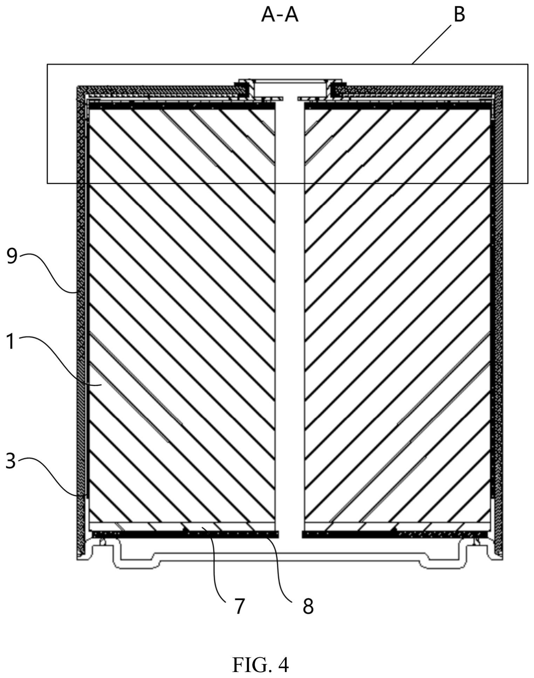

Referring to FIG. 3 to FIG. 5, in the embodiments of the present application, the battery cell 20 includes a main body portion 1, a first tab 2, a first insulating adhesive 3, and a second insulating adhesive 4, where the first tab 2 is formed at an axial end of the main body portion 1, the first insulating adhesive 3 is adhered to an outer periphery of the main body portion 1, the second insulating adhesive 4 is adhered to the first tab 2, and in the axial direction of the main body portion 1, a gap 5 is provided between the first insulating adhesive 3 and the second insulating adhesive 4.

Referring to FIG. 3 to FIG. 5, the battery cell 20 includes an electrode assembly, where the electrode assembly is a component in which electrochemical reactions take place in the battery cell 20. The electrode assembly includes a main body portion 1 and a first tab 2 and a second tab 7 extending from the axial ends of the main body portion 1, respectively. The main body portion 1 includes a positive electrode plate, a negative electrode plate, and a separator, which are wound to form the main body portion 1.

In some embodiments provided by the present application, both the first tab 2 and the second tab 7 are full-tab structures. The first tab 2 and the second tab 7 are formed at the axial ends of the main body portion 1 through a flattening process. The diameter of the first tab 2 and the diameter of the second tab 7 are substantially equal to the diameter of the main body portion 1.

In the embodiments provided by the present application, by providing a gap 5 between the first insulating adhesive 3 and the second insulating adhesive 4 in the axial direction of the main body portion 1, the formation of a step between the first insulating adhesive 3 and the second insulating adhesive 4 can be reduced, thereby reducing stress concentration points when the battery cell swells, mitigating issues such as electrode plate breakage, which is conducive to improving the safety of the battery.

In some embodiments, the gap 5 extends in a circumferential direction of the main body portion 1. In other words, the gap 5 is arranged in a ring shape, that is, the gap 5 surrounds the circumferential direction of the main body portion 1. This arrangement ensures that, in the circumferential direction of the main body portion 1, there is no overlap between the first insulating adhesive 3 and the second insulating adhesive 4, and therefore, there are no lap portions between the first insulating adhesive 3 and the second insulating adhesive 4, preventing the formation of any step, and significantly reducing stress concentration points during the swelling of the battery cell, preventing issues such as electrode plate breakage in the battery cell from occurring.

In other embodiments, multiple gaps 5 are arranged at intervals along the circumferential direction of the main body portion 1. In other words, in the circumferential direction of the main body portion 1, the multiple gaps 5 are not continuous but intermittent. Compared to the solution in which the first insulating adhesive 3 and the second insulating adhesive 4 fully overlap in the circumferential direction of the main body portion 1, providing multiple gaps 5 arranged at intervals can reduce a region area of stress concentration, thereby reducing the magnitude of concentrated stress and mitigating issues such as electrode plate breakage.

In some embodiments, in the axial direction of the main body portion 1, a width of the gap 5 is 1 mm to 2 mm.

Setting the width of the gap 5 to be from 1 mm to 2 mm, such as 1 mm, 1.3 mm, 1.5 mm, 1.8 mm, or 2 mm, can both reduce stress concentration points during the swelling of the battery cell, preventing issues such as electrode plate breakage in the battery cell from occurring. This can also allow the electrode assembly to have as large an insulation coverage range as possible, improving insulation performance.

In some embodiments, along the axial direction of the main body portion 1, the width of the gap 5 is fixed or variable along the circumferential direction.

Setting the width of the gap 5 to be fixed along the circumferential direction can ensure uniformity in the width of gap 5, enhancing the aesthetic appearance and overall integrity of the product. Alternatively, setting the width of gap 5 to vary along the circumferential direction can reduce the difficulty of adhering the first insulating adhesive 3 and the second insulating adhesive 4, improving adhesion efficiency.

In some embodiments, a puncture resistance of the second insulating adhesive 4 is greater than a puncture resistance of the first insulating adhesive 3.

The first tab 2 is generally made of aluminum foil, which is more fragile compared to the main body portion 1. Therefore, setting the puncture resistance of the second insulating adhesive 4 to be greater than the puncture resistance of the first insulating adhesive 3 can more effectively protect the first tab 2, and the first tab 2 is prevented from being damaged.

Puncture resistance is an important property of the insulating adhesive, referring to the ability of the insulating adhesive to resist puncture by external forces, also referred to as "puncture resistance force" or "puncture resistance strength".

The puncture resistance of the insulating adhesive can be improved by adjusting the thickness of the insulating adhesive or by adding an intermediate layer or thickening a material structure of an intermediate layer.

Puncture resistance force refers to the maximum force required for a puncture needle of specified specifications or dimensions to penetrate a test sample, or the maximum force value during the puncture process, and it is generally expressed in units of Newtons (N).

The method for measuring puncture resistance force may involve fixing test samples of the first insulating adhesive 3 and the second insulating adhesive 4 between two clamping rings (puncture resistance fixtures), respectively, with a puncture needle moving at a constant speed perpendicular to the sample and puncturing a central position to record the force value endured during puncture.

In addition, the puncture resistance strength of the second insulating adhesive 4 can be measured using an electronic tensile testing machine. The specific measurement method may involve cutting five test samples of the second insulating adhesive 4 with a diameter of 100 mm using a sampler; clamping the samples onto a dedicated puncture test fixture and fixing the fixture on a test equipment; setting test information such as test speed and sample thickness; and clicking the start test to begin the test. The electronic tensile testing machine automatically calculates and displays the final test results.

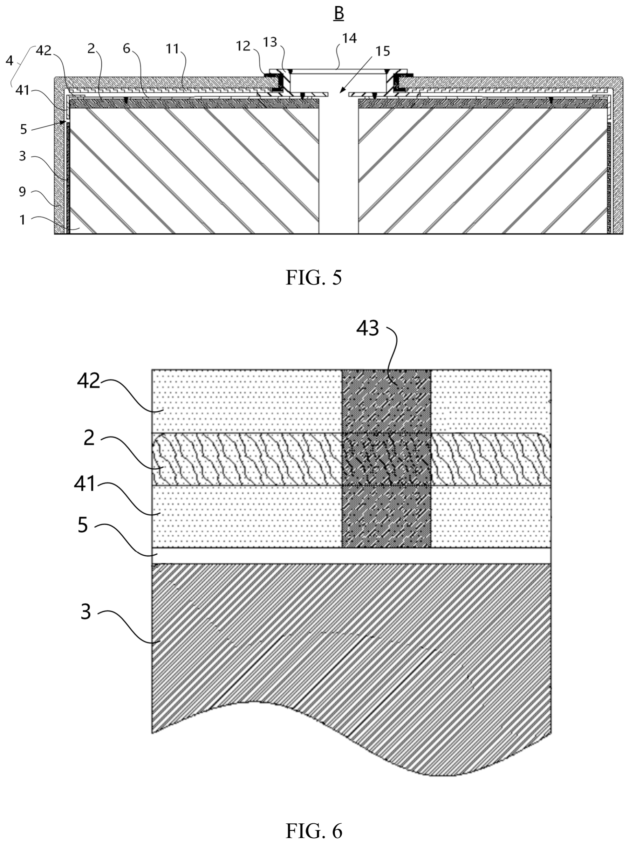

As shown in FIG. 6 to FIG. 8, in some embodiments, in the circumferential direction of the first tab 2, a head portion and a tail portion of the second insulating adhesive 4 have an overlapping portion 43.

By providing an overlapping portion 43, the head portion and tail portion of the second insulating adhesive 4 can be bonded together, such that the second insulating adhesive 4 forms a closed loop in the circumferential direction, providing 360° comprehensive insulation protection for the first tab 2. This also effectively improves the adhesion strength of the second insulating adhesive 4, so that the second insulating adhesive 4 is more firmly adhered to the first tab 2. Additionally, as the second insulating adhesive 4 generally has some elasticity, providing an overlapping portion 43 to bond the head portion and tail portion together can prevent the second insulating adhesive 4 from retracting due to reduced or lost elasticity, leading to failure in protecting the first tab 2.

In some embodiments, in the circumferential direction of the first tab 2, a length of the overlapping portion 43 is 5 mm to 10 mm.

Setting the circumferential length of the overlapping portion 43 to be from 5 mm to 10 mm, such as 5 mm, 6 mm, 7 mm, 8 mm, 9 mm, or 10 mm, can effectively enhance the stability of the second insulating adhesive 4 while preventing stress concentration due to an excessively long circumferential length of the overlapping portion.

Moreover, compared to the solution in which the first insulating adhesive 3 and the second insulating adhesive 4 have an overlapping portion, the overlapping portion 43 includes two layers of the second insulating adhesive 4 without stacking the first insulating adhesive 3, and therefore, even if an overlapping portion 43 exists, the probability of stress concentration is relatively low.

As shown in FIG. 6, in some embodiments, in the circumferential direction of the first tab 2, a head edge line and a tail edge line of the second insulating adhesive 4 are parallel.

In the above embodiment, having the head edge line and the tail edge line of the second insulating adhesive 4 parallel can enhance the overall aesthetic appearance of the second insulating adhesive 4, and the overlapping portion 43 formed after adhesion is a regular rectangle, which is relatively beautiful and regular.

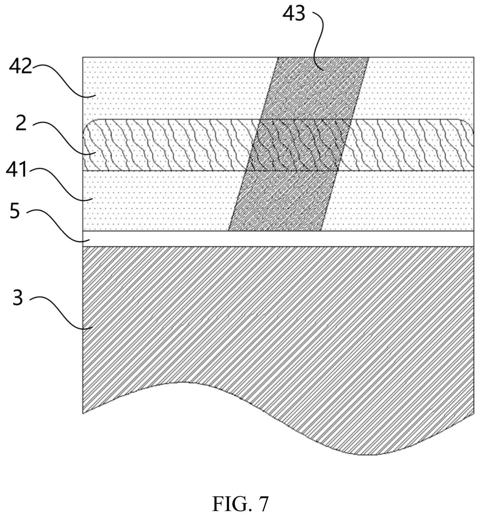

As shown in FIG. 7, in some embodiments, in the circumferential direction of the first tab 2, the head edge line and/or the tail edge line of the second insulating adhesive 4 is inclined relative to the axis of the main body portion 1.

In the above embodiment, three implementations are included: the first one is that the head edge line of the second insulating adhesive 4 is inclined relative to the axis of the main body portion 1; the second one is that the tail edge line of the second insulating adhesive 4 is inclined relative to the axis of the main body portion 1; and the third one is that both the head edge line and the tail edge line of the second insulating adhesive 4 are inclined relative to the axis of the main body portion 1.

By setting the head edge line and/or the tail edge line of the second insulating adhesive 4 to be inclined relative to the axis of the main body portion 1, a midline of the overlapping portion 43 is inclined relative to the axis of the main body portion 1, thereby increasing a length of the midline of the overlapping portion 43. When the second insulating adhesive 4 retracts due to reduced elasticity, this can increase the ability of the overlapping portion 43 to resist retraction forces, enhancing the adhesion strength of the second insulating adhesive 4.

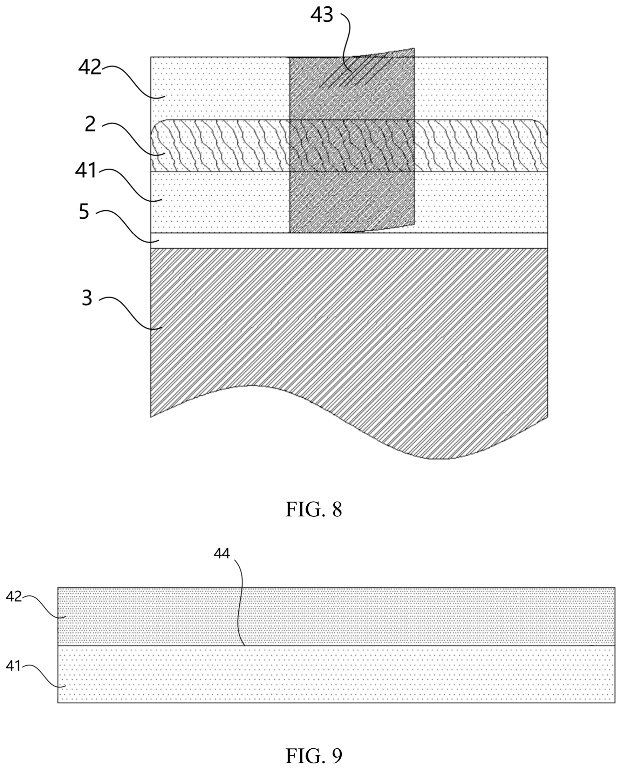

As shown in FIG. 8, in some embodiments, an upper layer of the overlapping portion 43 is misaligned relative to a lower layer. This embodiment allows for misalignment of the tail portion of the second insulating adhesive 4 during adhesion, providing a certain operational tolerance without affecting insulation and protection, thereby effectively improving operational efficiency. In addition, this misalignment may result from manufacturing errors of the second insulating adhesive 4, allowing the second insulating adhesive 4 to have some manufacturing errors and reducing the precision requirements for manufacturing the second insulating adhesive 4, thereby effectively controlling costs.

In some embodiments, the second insulating adhesive 4 includes a first adhesive portion 41 and a second adhesive portion 42, where the first adhesive portion 41 is circumferentially adhered to an outer periphery of the first tab 2, and the second adhesive portion 42 is adhered to an end face of the first tab 2 away from the main body portion 1.

By providing the first adhesive portion 41 and the second adhesive portion 42, the first adhesive portion 41 can be circumferentially adhered to the outer periphery of the first tab 2, and the second adhesive portion 42 can be adhered to the end face of the first tab 2 away from the main body portion 1, thereby providing multi-directional protection for the first tab 2.

By providing the second adhesive portion 42, the end face of the first tab 2 can be protected, preventing the structure of the end face of the first tab 2 from lifting up beyond the height of the first adhesive portion 41 and coming into contact with a housing, resulting in a short circuit.

In some embodiments, the battery cell 20 further includes a first current collector disc 6 disposed on the end face of the first tab 2 away from the main body portion 1, and the second adhesive portion 42 is adhered to the first current collector disc 6.

An active material layer is formed on the first current collector disc 6, and the first current collector disc 6 gathers the current generated by the active material layer to form a larger current for external output.

By adhering the second adhesive portion 42 to the first current collector disc 6, the second adhesive portion 42 can fully wrap around the portion of the first tab 2 exposed outside the first current collector disc 6, thereby providing more comprehensive protection for the first tab 2.

In some embodiments, the first current collector disc 6 is coaxially arranged with the main body portion 1, and the diameter of the first current collector disc 6 is smaller than the diameter of the main body portion 1.

When installing the first current collector disc 6, if there is a manufacturing error in the first current collector disc 6, to ensure coaxial alignment of the first current collector disc 6 with the main body portion 1, the first current collector disc 6 may extend beyond the main body portion 1 in a radial direction after installation. In such cases, when the main body portion 1 and the first current collector disc 6 are placed into a housing 9, the first current collector disc 6 may scrape against the housing 9. Therefore, setting the diameter of the first current collector disc 6 to be smaller than the diameter of the main body portion 1 can effectively prevent the first current collector disc 6 from scraping against the housing 9 when the main body portion 1 and the first current collector disc 6 are placed into the housing 9 together.

The first tab 2 is located between the first current collector disc 6 and the main body portion 1. When the diameter of the first current collector disc 6 is smaller than the diameter of the main body portion 1, the portion of the end of the first tab 2 not covered by the first current collector disc 6 is exposed. If this exposed portion of the tab is not fully covered and wrapped by the second adhesive portion 42, it may bulge upward, affecting the structure of the first tab 2 or potentially coming into contact with other components, posing a risk of short circuit. Additionally, a specific tab piece in the exposed portion may lift up and come into contact with other components, also posing a risk of short circuit. Therefore, adhering the second adhesive portion 42 to the first current collector disc 6 can effectively prevent the exposed portion of the first tab 2 not covered by the first current collector disc 6 from bulging or lifting up, thereby preventing damage to the structure of the tab or preventing a risk of a short circuit.

In some embodiments, the first adhesive portion 41 and the second adhesive portion 42 are connected or integrally formed.

By connecting or integrally forming the first adhesive portion 41 and the second adhesive portion 42, the first adhesive portion 41 and the second adhesive portion 42 can be connected as a whole. During adhesion of the second insulating adhesive 4, the cooperation between the first adhesive portion 41 and the second adhesive portion 42 can achieve better adhesion results. For example, the first adhesive portion 41 can be adhered to the outer periphery of the first tab 2 first, and then a smoothing device can be used to adhere the second adhesive portion 42 to the end face of the first tab 2.

In some embodiments, a viscosity of the second adhesive portion 42 is greater than a viscosity of the first adhesive portion 41.

When the second adhesive portion 42 is bent 90° inward from a position parallel to the axis of the main body portion 1 to be adhered to the end face of the first tab 2, wrinkles may be formed in the second adhesive portion 42, and these wrinkled portions may be exposed to air, causing an adhesive material in the second adhesive portion 42 to dehydrate due to air drying, thereby reducing its viscosity. In contrast, the first adhesive portion 41 is adhered to the outer periphery of the first tab 2, and remains relatively flat after adhesion, with less chance of air entering, thus reducing the probability of viscosity reduction due to dehydration. Therefore, setting the viscosity of the second adhesive portion 42 to be greater than the viscosity of the first adhesive portion 41 can ensure that the second adhesive portion 42 can still have sufficient viscosity to remain adhered to the end face of the first tab 2 even after viscosity reduction due to dehydration.

Additionally, since the second adhesive portion 42 is bent and smoothed onto the end face of the first tab 2, the elasticity of the second adhesive portion 42 may decrease over time, posing a risk of retraction. Setting the viscosity of the second adhesive portion 42 to be greater than the viscosity of the first adhesive portion 41 can ensure the second adhesive portion 42 to have greater resistance to the reduction in elasticity and retraction, preventing adhesion failure of the second adhesive portion 42.

The viscosity of the first adhesive portion 41 is lower than the viscosity of the second adhesive portion 42. This allows the first adhesive portion 41 to be easily removed without adhering to the material of the main body portion 1 if the first adhesive portion 41 needs to be reworked due to improper adhesion, facilitating re-adhesion.

In some embodiments, the first adhesive portion 41 may use hot-melt adhesive, and the second adhesive portion 42 may use acrylic adhesive.

Viscosity is a physical measurement used to gauge the magnitude of viscous force. It reflects the strength of the interaction between fluid molecules during motion. When a fluid flows, relative motion is provided between adjacent fluid layers, generating frictional resistance between the two fluid layers, known as viscous resistance.

The magnitude of viscosity is affected by temperature. As temperature increases, the distance between liquid molecules increases, reducing intermolecular attraction, thereby decreasing internal friction, leading to a decrease in the viscosity of the adhesive material.

The viscosity of the insulating adhesive can be tested using the following three methods.
1. Initial tack: This tests the ability of the insulating adhesive to initially adhere to an object. The general method involves naturally rolling a standard steel ball on a 45-degree inclined insulating adhesive, gradually increasing the size of the steel ball. The larger the steel ball that can be adhered, the greater the initial tack.
2. Holding power: This measures the sustained adhesion capability after the insulating adhesive fully adheres to an object. Test principle: A test board with an adhesive sample is vertically suspended on a test frame, with a specified weight hung at a lower end. The displacement of the sample after a certain period or the time until the sample completely detaches is used to characterize the resistance of the adhesive sample to detachment.
3. Peel strength, also known as adhesion force: This refers to the average force required to peel the insulating adhesive from an object at a certain speed after adhesion. The peel strength affects the force required to separate the object from the adhered object. A higher peel strength makes it more difficult to separate the object from a surface of another object. Conversely, if the peel strength is too low, it affects the adhesive performance of the insulating adhesive. The test method of peel strength: An insulating adhesive with standard width is adhered to a specific steel plate, and then a machine hand tears the insulating adhesive from the steel plate. The stable force of the machine hand reflects the peel strength. The principle of peel strength principle of the insulating adhesive: Two adhered materials are bonded with an adhesive to form a bonded sample, then the bonded sample is peeled from a bonded opening at a specified rate, and the two adhered materials are gradually separated along the direction of the length of a bonded surface.

In some embodiments, a ratio of a width of the first adhesive portion 41 in the axial direction of the main body portion 1 to a width of the second adhesive portion 42 in a direction perpendicular to the axis of the main body portion 1 is from 1:1 to 2:1.

Setting the ratio of the width of the first adhesive portion 41 in the axial direction of the main body portion 1 to the width of the second adhesive portion 42 in a direction perpendicular to the axis of the main body portion 1 to be from 1:1 to 2:1 enables a more comprehensive protection of the first tab 2 while achieving a reasonable distribution for the outer periphery and end face of the first tab 2 under cost-saving conditions.

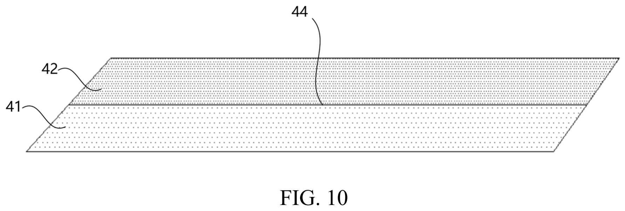

As shown in FIG. 9 and FIG. 10, in some embodiments, the second insulating adhesive 4 is provided with an indication line 44, where the indication line 44 divides the second insulating adhesive 4 into the first adhesive portion 41 and the second adhesive portion 42.

By providing the indication line 44, the range of the first adhesive portion 41 and the second adhesive portion 42 can be quickly identified through the indication line 44 during adhesion of the second insulating adhesive 4. The indication line 44 is used as an operational aid, effectively improving adhesion efficiency.

In some embodiments, a color of the indication line 44 is different from a color of the second insulating adhesive 4.

By setting the color of the indication line 44 to be different from the color of the second insulating adhesive 4, the indication line 44 becomes more conspicuous, making it easier for operators to identify the position thereof.

In some embodiments, the second adhesive portion 42 includes a substrate and adhesive backing disposed on the substrate, where a color of at least one of the substrate and the adhesive backing is set to prevent reflection from occurring when detecting the width of the second adhesive portion 42.

By setting the color of at least one of the substrate and the adhesive backing to prevent reflection from occurring when detecting the width of the second adhesive portion 42, reflection can be prevented from occurring due to overly light colors of the substrate and adhesive backing during width detection of the second adhesive portion 42, thereby affecting the accuracy of the test.

For example, at least one of the substrate and the adhesive backing may be set to a darker color, such as black or brown.

In some embodiments, the battery cell 20 further includes a housing 9, where the housing 9 has an accommodating cavity, the main body portion 1 and the first tab 2 are disposed in the accommodating cavity, and a material of the housing 9 is configured to prevent corrosion from occurring due to contact between the housing 9 and the negative electrode of the battery cell 20.

During winding of the main body portion 1, an anode material generally wraps around a cathode material, so the anode material is usually located on an outer layer. Due to the gap 5 provided between the first insulating adhesive 3 and the second insulating adhesive 4, this gap 5 may result in exposed portions of the anode material (that is, a negative electrode portion) of the main body portion 1 or the first tab 2. If these exposed portions bulge or warp upward, these exposed portions may come into contact with the housing 9, causing corrosion to the housing 9. Therefore, setting the material of the housing 9 to prevent corrosion from occurring due to contact between the housing 9 and the negative electrode of the battery cell 20, corrosion can be prevented from occurring if the exposed portions bulge or warp upward and come into contact with the housing 9. For example, contact between the negative electrode of the battery and an aluminum housing under certain conditions may lead to corrosion of the aluminum housing, causing battery electrolyte leakage.

In some embodiments provided by the present application, the housing 9 may be made of materials such as stainless steel or plastic. A steel housing is uncharged or negatively charged, and will not be corroded even if it comes into contact with the negative electrode portion of the battery.

The housing 9 is a component configured to provide an accommodating space for accommodating the electrode assembly, an electrolyte, and other components therein. The housing 9 includes an accommodating body with an opening and an end cover for sealing the opening. The accommodating body and the end cover may be separate components, the accommodating body is provided with the opening, and the end cover covers the opening to form the internal environment of the battery cell 20. Without limitation, the end cover and the accommodating body may also be integrated. Specifically, the end cover and the accommodating body may form a shared connection surface before other components are disposed inside the housing, then the end cover covers the accommodating body when inside of the accommodating body needs to be enclosed, and the accommodating body and the end cover are packaged integrally.

The accommodating body is a component configured to cooperate with the end cover to form the internal environment of the battery cell 20, and the end cover is a component that covers the opening of the accommodating body to isolate the internal environment of the battery cell 20 from the external environment. Without limitation, the shape of the end cover may be adapted to the shape of the accommodating body to cooperate with the accommodating body. Optionally, the end cover may be made of a material with a certain hardness and strength, so that the end cover is less likely to deform under squeezing or swelling, enabling the battery cell 20 to have higher structural strength and improved safety performance.

In some embodiments, the end cover may also be provided with a pressure relief mechanism for releasing internal pressure when the internal pressure or temperature of the battery cell 20 reaches a threshold.

The housing 9 may be of various shapes and sizes, such as a cuboid, a cylinder, and a hexagonal prism. Specifically, the shape of the housing 9 may be determined based on the specific shape and size of the electrode assembly.

The present application also provides a battery 100. The battery 100 includes a box and the battery cell 20 described above, where the battery cell 20 is disposed within the box, and the battery cell 20 is configured to provide electrical energy.

The present application also provides an electric device, including the battery cell 20 described above, where the battery cell 20 is configured to supply electrical energy to the electric device; or the electric device including the battery 100 described above, where the battery 100 is configured to supply electrical energy to the electric device.

The structure of a battery cell according to an embodiment of the present application is described below with reference to FIG. 3 to FIG. 10.

As shown in FIG. 3 to FIG. 5, the battery cell 20 includes a main body portion 1, a first tab 2, a first insulating adhesive 3, a second insulating adhesive 4, a first current collector disc 6, a second tab 7, a second current collector disc 8, a housing 9, an insulating member 11, a sealing ring 12, a terminal post 13, and a sealing nail 14.

The main body portion 1, the first tab 2, and the second tab 7 are all cylindrical in shape. The first tab 2 and the second tab 7 are formed at the opposite axial ends of the main body portion 1 through a flattening process. The first current collector disc 6 and the second current collector disc 8 are both disc-shaped. In addition, the main body portion 1, the first tab 2, the second tab 7, the first current collector disc 6, and the second current collector disc 8 are coaxially arranged.

The main body portion 1, the first tab 2, the first current collector disc 6, the second tab 7, the second current collector disc 8, and the insulating member 11 are all disposed within the internal cavity of the housing 9.

The second current collector disc 8 is disposed on the end face of the second tab 7 away from the main body portion 1. The insulating member 11 is disposed between the first current collector disc 6 and the top end cover of the housing 9. The top end cover of the housing 9 is provided with a mounting hole, the terminal post 13 is installed in the through hole, and the sealing ring 12 is disposed between the terminal post 13 and the end cover. The center of the terminal post 13 is provided with a sealing nail 14. The first current collector disc 6 is provided with an injection opening 15.

The first insulating adhesive 3 is adhered to the outer periphery of the main body portion 1. The second insulating adhesive 4 is adhered to the outer periphery and end face of the first tab 2. In addition, the first current collector disc 6 is disposed on the end face of the first tab 2 away from the main body portion 1, and one end of the second insulating adhesive 4 is adhered to the first current collector disc 6.

In the axial direction of the main body portion 1, a gap 5 is provided between the first insulating adhesive 3 and the second insulating adhesive 4. The gap 5 extends in the circumferential direction of the main body portion 1 to form a ring shape.

In this embodiment, in the height direction, the top of the first insulating adhesive 3 is adhered to the main body portion 1 at a height of 80% to 85%, and the bottom is adhered to the main body portion 1 at a height of 15% to 20%. The distance between the top of the first insulating adhesive 3 and the top surface of the first tab 2 is approximately 10 mm.

As shown in FIG. 6, the second insulating adhesive 4 includes a first adhesive portion 41 adhered to the outer periphery of the first tab 2 and a second adhesive portion 42 adhered to the end face of the first tab 2. In the circumferential direction, the head portion and tail portion of the second insulating adhesive 4 overlap to form an overlapping portion 43.

In the embodiment shown in FIG. 6, the overlapping portion 43 is rectangular, and the edge lines of the overlapping portion 43 are perpendicular to the axis of the main body portion 1.

In the embodiment shown in FIG. 7, the overlapping portion 43 is a parallelogram, and both the head edge line and the tail edge line of the second insulating adhesive 4 are inclined relative to the axis of the main body portion 1.

In the embodiment shown in FIG. 8, the upper layer of the overlapping portion 43 is misaligned relative to the lower layer. A top edge of the upper layer extends beyond a top edge of the lower layer, and a bottom edge of the lower layer is also above the bottom edge of the lower layer.

As shown in FIG. 9, both the head edge line and the tail edge line of the second insulating adhesive 4 are parallel to the axis of the main body portion 1.

As shown in FIG. 10, both the head edge line and the tail edge line of the second insulating adhesive 4 are inclined relative to the axis of the main body portion 1.

The second insulating adhesive 4 is further provided with an indication line 44 for dividing the first adhesive portion 41 and the second adhesive portion 42, where one side of the indication line 44 is the first adhesive portion 41, and the other side is the second adhesive portion 42.

This embodiment provides a gap 5 between the first insulating adhesive 3 and the second insulating adhesive 4, ensuring that the first insulating adhesive 3 and the second insulating adhesive 4 do not overlap on the side of the battery cell, preventing the formation of a step due to thickness differences caused by the overlap of the first insulating adhesive 3 and the second insulating adhesive 4, and preventing stress formation after swelling of a cell and an electrode plate during charging and discharging, leading to the breakage of the outer electrode plates of the cell.

Although the present application has been described with reference to the preferred embodiments, various modifications to the present application and replacements of the components therein with equivalents can be made without departing from the scope of the present application. In particular, as long as there is no structural conflict, the various technical features mentioned in the embodiments can be combined in any manner. The present application is not limited to the specific embodiments disclosed in this specification, but includes all technical solutions falling within the scope of the claims.

## Claims

1. A battery cell (20), comprising:
a main body portion (1);
a first tab (2), formed at an axial end of the main body portion (1);
a first insulating adhesive (3), adhered to an outer periphery of the main body portion (1); and
a second insulating adhesive (4), adhered to the first tab (2);
wherein, in an axial direction of the main body portion (1), a gap (5) is provided between the first insulating adhesive (3) and the second insulating adhesive (4).

2. The battery cell (20) according to claim 1, wherein the gap (5) extends in a circumferential direction of the main body portion (1).

3. The battery cell (20) according to claim 1 or 2, wherein, in the axial direction of the main body portion (1), a width of the gap (5) is 1 mm to 2 mm.

4. The battery cell (20) according to any one of claims 1 to 3, wherein, in the axial direction of the main body portion (1), the width of the gap (5) is fixed or variable along the circumferential direction.

5. The battery cell (20) according to any one of claims 1 to 4, wherein a puncture resistance of the second insulating adhesive (4) is greater than a puncture resistance of the first insulating adhesive (3).

6. The battery cell (20) according to any one of claims 1 to 5, wherein, in a circumferential direction of the first tab (2), a head portion and a tail portion of the second insulating adhesive (4) have an overlapping portion (43).

7. The battery cell (20) according to claim 6, wherein, in the circumferential direction of the first tab (2), a length of the overlapping portion (43) is 5 mm to 10 mm.

8. The battery cell (20) according to claim 6 or 7, wherein an upper layer of the overlapping portion (43) is misaligned relative to a lower layer.

9. The battery cell (20) according to any one of claims 1 to 8, wherein, in the circumferential direction of the first tab (2), a head edge line and a tail edge line of the second insulating adhesive (4) are parallel.

10. The battery cell (20) according to any one of claims 1 to 9, wherein, in the circumferential direction of the first tab (2), the head edge line and/or the tail edge line of the second insulating adhesive (4) is inclined relative to an axis of the main body portion (1).

11. The battery cell (20) according to any one of claims 1 to 10, wherein the second insulating adhesive (4) comprises a first adhesive portion (41) and a second adhesive portion (42), the first adhesive portion (41) being circumferentially adhered to an outer periphery of the first tab (2), and the second adhesive portion (42) being adhered to an end face of the first tab (2) away from the main body portion (1).

12. The battery cell (20) according to claim 11, further comprising a first current collector disc (6) disposed on the end face of the first tab (2) away from the main body portion (1), wherein the second adhesive portion (42) is adhered to the first current collector disc (6).

13. The battery cell (20) according to claim 11 or 12, wherein the first adhesive portion (41) and the second adhesive portion (42) are connected or integrally formed.

14. The battery cell (20) according to any one of claims 11 to 13, wherein a viscosity of the second adhesive portion (42) is greater than a viscosity of the first adhesive portion (41).

15. The battery cell (20) according to any one of claims 11 to 14, wherein a ratio of a width of the first adhesive portion (41) in the axial direction of the main body portion (1) to a width of the second adhesive portion (42) in a direction perpendicular to the axis of the main body portion (1) is from 1:1 to 2:1.

16. The battery cell (20) according to any one of claims 11 to 15, wherein the second insulating adhesive (4) is provided with an indication line (44), and the indication line (44) divides the second insulating adhesive (4) into the first adhesive portion (41) and the second adhesive portion (42).

17. The battery cell (20) according to claim 16, wherein a color of the indication line (44) is different from a color of the second insulating adhesive (4).

18. The battery cell (20) according to any one of claims 11 to 17, wherein the second adhesive portion (42) comprises a substrate and adhesive backing disposed on the substrate, and a color of at least one of the substrate and the adhesive backing is set to prevent reflection from occurring when detecting the width of the second adhesive portion (42).

19. The battery cell (20) according to any one of claims 11 to 18, further comprising a housing (9), wherein the housing (9) has an accommodating cavity, the main body portion (1) and the first tab (2) are disposed in the accommodating cavity, and a material of the housing (9) is configured to prevent corrosion from occurring due to contact between the housing (9) and a negative electrode of the battery cell (20).

20. A battery (100), comprising a box and the battery cell (20) according to any one of claims 1 to 19, wherein the battery cell (20) is disposed within the box, and the battery cell (20) is configured to provide electrical energy.

21. An electric device, comprising the battery cell (20) according to any one of claims 1 to 19, the battery cell (20) being configured to supply electrical energy to the electric device; or the electric device comprising the battery (100) according to claim 20, the battery (100) being configured to supply electrical energy to the electric device.
